# EUROPEAN PATENT SPECIFICATION

(11) **EP 0 576 267 B1**
(45) Date of publication and mention of the grant of the patent: **05.03.1997**
(21) Application number: 93304897.7
(22) Date of filing: 23.06.1993
(51) Int. Cl.: A01N 25/34

(54) **Insecticide support materials**
Trägermaterialien für Insektizide
Matériaux pour le support des insecticides

(30) Priority: 26.06.1992 JP 168897/92; 17.09.1992 JP 247531/92
(43) Date of publication of application: 29.12.1993
(73) Proprietor: SUMITOMO CHEMICAL COMPANY LIMITED, Osaka-shi, Osaka 541 (JP)
(72) Inventor: Sembo, Satoshi, Takarazuka-shi, Hyogo (JP)
(74) Representative: Dixon, Donald Cossar

(56) References cited:
- BE-A- 899 627
- FR-A- 2 386 254
- GB-A- 1 160 237

## Description

This invention relates to insecticide support materials, and more particularly to insecticide support materials for use in animal collars, the materials imparting to the insecticide a sustained effect of exterminating insect pests such as fleas, ticks and the like that inhabit body hairs of pets such as dogs and cats.

Various insecticide support materials for use in animal collars, and which impart an effect of exterminating insect pests such as fleas, ticks and the like have been developed and put into practical use. These prior art support materials, however, are not safisfactory in terms of their long term exterminating effects.

With the aim of developing an insecticide support or carrier material which can maintain an excellent pest control effect over a prolonged period of time, we have conducted intensive studies and found a desirable insecticide support material capable of imparting excellent pest control effects.

According to the present invention there is provided an insecticide support material suitable for use in animal collars which comprises a support material, preferably an artificial leather material, impregnated with an insecticide active component, wherein the support material is a polyurethane-based support material having a density of from 0.3 to 0.45 g/cm³. Preferably, the support material comprises (a) a polyurethane surface layer having a fine porous structure and (b) a base layer attached to the polyurethane layer and which comprises nylons three-dimensionally adhered to each other with a polyurethane. Preferred support materials are artificial leather materials including materials described in U.S. Patent No. 3,503,784. These materials are artificial leathers available from Kuraray Co., Ltd. under the trade name of Kuralino, and Kuralino 6038-0118 has a density of from 0.3 to 0.45 g/cm³.

Various types of compounds may be used in the present invention as the insecticide active agent or component, including pyrethroid compounds, organic phosphorous compounds, carbamate compounds and the like having insecticidal and acaricidal activities; insect growth retardants such as juvenile hormone-like compounds, chitin synthesis inhibitors and the like; and insect pest repellents. The following illustrative non-limiting examples of these compounds, which are described by chemical name and common name, together with their assigned compound referencing numbers. Of course, the insecticide active components eligible for use in the present invention are not limited to these compounds. These compounds may be used alone or as a mixture of two or more.
(1) 2-methyl-4-oxo-3-(2-propynyl)cyclopent-2-enyl chrysanthemate
(2) (S)-2-methyl-4-oxo-3-(2-propynyl)cyclopent-2-enyl (1R)-cis,trans-chrysanthemate (prallethrin)
(3) 2-methyl-4-oxo-3-(2-propenyl)cyclopent-2-enyl chrysanthemate (allethrin)
(4) 2-methyl-4-oxo-3-(2-propenyl)cyclopent-2-enyl (1R)-cis,trans-chrysanthemate (d-allethrin)
(5) 2-methyl-4-oxo-3-(2-propenyl)cyclopent-2-enyl (1R)-trans-chrysanthemate (bioallethrin)
(6) (S)-2-methyl-4-oxo-3-(2-propenyl)cyclopent-2-enyl (1R)-trans-chrysanthemate
(7) 2-methyl-4-oxo-3-(2-furfuryl)cyclopent-2-enyl chrysanthemate (furethrin)
(8) 2-methyl-4-oxo-3-(2-propenyl)cyclopent-2-enyl 2,2,3,3-tetramethylcyclopropanecarboxylate (terallethrin)
(9) natural pyrethrins
(10) 5-(2-propynyl)furfuryl chrysanthemate (furamethrin)
(11) 5-(2-propynyl)furfuryl (1R)-cis,trans-chrysanthemate (d-furamethrin)
(12) 5-benzyl-3-furylmethl chrysanthemate (resmethrin)
(13) 5-benzyl-3-furylmethl (1R)-cis,trans-chrysanthemate (d-resmethrin)
(14) 3-phenoxybenzyl 3-(2,2-dichlorovinyl)-2,2-dimethylcyclopropanecarboxylate (permethrin)
(15) α-cyano-3-phenoxybenzyl chrysanthemate
(16) α-cyano-3-phenoxybenzyl (1R)-cis,trans-chrysanthemate (cyphenothrin)
(17) α-cyano-3-phenoxybenzyl 3-(2,2-dichlorovinyl)-2,2-dimethylcyclopropanecarboxylate (cypermethrin)
(18) α-cyano-3-phenoxybenzyl 2-(4-chlorophenyl)-3-methylbutyrate (fenvalerate)
(19) (S)-α-cyano-3-phenoxybenzyl 2-(4-chlorophenyl)-3-methylbutyrate (esfenvalerate)
(20) 1-ethynyl-2-methyl-2-pentenyl chrysanthemate
(21) 1-ethynyl-2-methyl-2-pentenyl (1R)-cis,trans-chrysanthemate (empenthrin)
(22) 3,4,5,6-tetrahydrophthalimidomethyl chrysanthemate (tetramethrin)
(23) 3,4,5,6-tetrahydrophthalimidomethyl (1R)-cis,trans-chrysanthemate (d-tetramethrin)
(24) α-cyano-4-fluoro-3-phenoxybenzyl 3-(2,2-dichlorovinyl)-2,2-dimethylcyclopropanecarboxylate (cyfluthrin)
(25) α-cyano-3-phenoxybenzyl 3-(2,2-dibromovinyl)-2,2-dimethylcyclopropanecarboxylate
(26) (S)-α-cyano-3-phenoxybenzyl (1R)-cis-3-(2,2-dibromovinyl)-2,2-dimethylcyclopropanecarboxylate (deltamethrin)
(27) 2,3,5,6-tetrafluorobenzyl (1R)-trans-3-(2,2-dichlorovinyl)-2,2-dimethylcyclopropanecarboxylate (benfluthrin)
(28) 3-phenoxybenzyl chrysanthemate (phenothrin)
(29) 3-phenoxybenzyl (1R)-cis,trans-chrysanthemate (d-phenothrin)
(30) 2-(4-ethoxyphenyl)-2-methylpropyl 3-phenoxybenzyl ether (ethofenprox)
(31) *O*-(2,2-dichlorovinyl) *O,O*-dimethyl phosphate (dichlorvos)
(32) *O*-[2-chloro-1-(2,4-dichlorophenyl)vinyl] *O,O*-dimethyl phosphate (dimethylvinphos)
(33) *O*-[2-chloro-1-(2,4-dichlorophenyl)vinyl] *O,O*-diethyl phosphate (chlorfenvinphos)
(34) *O*-[trans-2-chloro-1-(2,4,5-trichlorophenyl)vinyl *O,O*-dimethyl phosphate (tetrachlorvinphos)
(35) 2-methoxy-4H-1,3,2-benzodioxaphosphorin-2-sulfide (salithion)
(36) *O,O*-dimethyl *O*-[3-methyl-4-(methylthio)phenyl] phosphorothioate (fenthion)
(37) *O*-(4-cyanophenyl) *O,O*-dimethyl phosphorothioate (cyanophos)
(38) *O,O*-dimethyl *O*-(3-methyl-4-nitrophenyl) phosphorothioate (fenitrothion)
(39) *O,O*-dimethyl *O*-(3,5,6-trichloro-2-pyridyl) phosphorothioate (chlorpyrifos-methyl)
(40) *O,O*-diethyl *O*-(3,5,6-trichloro-2-pyridyl) phosphorothioate (chlorpyrifos)
(41) *O,O*-diethyl *O*-(2-isopropyl-6-methyl-4-pyrimidinyl) phosphorothioate (diazinon)
(42) S-[1,2-bis(ethoxycarbonyl)ethyl] *O,O*-dimethyl phosphorodithioate (malathion)
(43) *O,O*-dimethyl S-(N-methylcarbamoylmethyl) phosphorodithioate (dimethoate)
(44) *O,O*-dimethyl (2,2,2-trichloro-1-hydroxyethyl)phosphonate (trichlorfon)
(45) o-(sec-butyl)phenyl N-methylcarbamate (BPMC)
(46) 3,4-xylyl N-methylcarbamate (MPMC)
(47) o-isopropoxyphenyl N-methylcarbamate (propoxur)
(48) 1-naphthyl N-methylcarbamate (carbaryl)
(49) 2,3-dihydro-2,2-dimethylbenzofuran-7-yl N-methylcarbamate (carbofuran)
(50) 2,2-dimethyl-1,3-benzodioxol-4-yl N-methylcarbamate (bendiocarb)
(51) 5-methoxy-3-(2-methoxyphenyl)-1,3,4-oxadiazol-2(3H)-one (metoxadiazone)
(52) 4-phenoxyphenyl 2-(2-pyridyloxy)propyl ether (pyriproxyfen)
(53) isopropyl (2E,4E)-11-methoxy-3,7,11-trimethy-2,4-dodecadienoate (methoprene)
(54) ethyl (2E,4E)-3,7,11-trimethy-2,4-dodecadienoate (hydroprene)
(55) 1-(4-chlorophenyl)-3-(2,6-difluorobenzoyl)urea (diflubenzuron)
(56) N-cyclopropyl-1,3,5-triazin-2,4,6-triamine (cyromazine)
(57) N,N-diethyl-m-toluamide (deet)

Among these compounds, prallethrin, d-allethrin, cyphenothrin, empenthrin, d-tetramethrin, d-phenothrin, fenitrothion, metoxadiazone and pyriproxyfen are preferably used.

If necessary, a synergist may be added optionally to these above insecticide active components. Illustrative examples of the synergist are shown below with their assigned compound referencing numbers.
(A) bis(2,3,3,3-tetrachloropropyl) ether
(B) N-(2-ethylhexyl)bicyclo[2.2.1]hept-5-en-2,3-dicarboximide
(C) isobornyl thiocyanatoacetate
(D) α-[2-(2-butoxyethoxy)ethoxy]-4,5-methylenedioxy-2-propyltoluene

When such a synergist is added, it may be used in an amount of from 1 to 10 by weight parts based on 1 weight part of the insecticide active component.

The aforementioned artificial leather support material to be impregnated with the insecticide active component and the like are widely known industrial materials and can be readily obtained. In the present invention, however, a specified artificial leather polyurethane support material having a density of from 0.3 to 0.45 g/cm³, was selected in order to obtain not only immediate insecticidal effect but also to maintain a stable sustained insecticidal effect over relatively long period of time in service.

When the above support material is impregnated with the insecticide active component or the like, the impregnation may be effected, for example, by adding the insecticide active component, if necessary together with a synergist, to the base material in a dropwise manner. When the insecticide active component is a solid or a highly viscous liquid, it may be dissolved in an appropriate solvent, such as acetone or the like, prior to its dropwise addition to the base material. As an alternative industrially desirable impregnation method, the support material may be soaked in an organic solvent solution, acetone solution for example, having an appropriate amount of the insecticide active component or the like as a solute. Alternatively, an appropriate amount of the insecticide active component may be deposited on the support material and then pressed by an appropriate means to effect its impregnation.

The amount of the insecticide active component to be impregnated varies depending on the type of active component, conditions where the base material is to be used and other factors, as will be understood by one of skill in the field. For example, when the impregnated support material is used as a pet collar, the amount of the insecticide active component to be impregnated therein varies depending on the anticipated type and size of the animal to enjoy the protection of the collar, as well as the type of the insect pest intended to be exterminated, among other things. When the active component is used for the extermination of fleas from dogs, cats and the like, the active component generally is used in an amount of from 15 to 100 mg per 1 cm² of the coating area, predetermined as appropriate for the contemplated animal and pest(s) to be controlled, or from 0.3 to 5 g per one collar.

The thus obtained support material impregnated with the insecticide active component may be formed into a collar by cutting it into an appropriate shape and then equipping it with necessary fastening parts, such as buckles and the like. A collar for animal use, as one of the embodiments of the present invention, also may be produced by impregnating a previously produced artificial leather collar with the insecticide active component in accordance with the aforementioned method.

The following Examples are provided to further illustrate the present invention. It is to be understood, however, that the Examples are for purpose of illustration only and are not intended to define the limits of the invention.

### EXAMPLE 1

An artificial leather support material (358 mm in length, 123.5 mm in width and 2.8 mm in thickness) having a density of 0.38 g/cm³, comprising a polyurethane surface layer having a fine porous structure and attached to a base layer of non woven fabric resulting from three-dimensional adhesion of nylons with a polyurethane, was impregnated with 0.2 g of the compound (52) and 2.0 g of the compound (2) by adding them dropwise to the surface of the artificial leather material.

### EXAMPLE 2

A 0.2 g portion of the compound (52) and 2.0 g of the compound (2) were put on the same type of leather support material used in Example 1 and spread by pressing them with a glass rod.

### EXAMPLE 3

The same type of artificial leather support material used in Example 1 was impregnated with 0.2 g of the compound (52) and 2.0 g of the compound (38) by adding them dropwise to the support material.

### EXAMPLE 4

The same type of artificial leather support material used in Example 1 was impregnated with 0.2 g of the compound (52) and 2.0 g of the compound (29) by adding them dropwise to the support material.

### EXAMPLE 5

The same type of artificial leather support material used in Example 1 was impregnated with 0.2 g of the compound (52) and 2.0 g of the compound (51) by dissolving them in an appropriate amount of acetone solvent and adding the resulting solution dropwise to the support material.

### EXAMPLE 6

The same type of artificial leather support material used in Example 1 was soaked for 30 seconds in 500 ml of acetone solution containing 100 g of the compound (51).

### EXAMPLE 7

A support layer of Kuralino 6038-0118, manufactured by Kuraray Co., Ltd., having a length of 10 mm, a width of 12.35 mm and a thickness of 2.8 mm (density, 0.38 g/cm³) was impregnated with 56 mg of the compound (2), (4), (16), (21), (23), (29), (38) or (51), as indicated in Table 1, by adding it dropwise to the polyurethane surface of the support layer. A total of 30 cat fleas were allowed to creep onto the thus prepared sample, which was subsequently covered with a plate of 5.5 cm in diameter and 1.5 cm in height. Thereafter, the number of dead or dying fleas was observed at predetermined intervals. The observation was repeated three times, with the average results achieved shown in Table 1.

**TABLE 1**

| Compound Tested | Lethality (%) after: | | | |
|---|---|---|---|---|
| | 1 hr | 2 hrs | 4 hrs | 24 hrs |
| (2) | 93 | 100 | 100 | 100 |
| (4) | 72 | 78 | 94 | 100 |
| (16) | 94 | 100 | 100 | 100 |
| (21) | 96 | 100 | 100 | 100 |
| (23) | 36 | 68 | 90 | 100 |
| (29) | 78 | 98 | 100 | 100 |
| (38) | 96 | 100 | 100 | 100 |
| (51) | 100 | 100 | 100 | 100 |

### EXAMPLE 8

A support layer of Kuralino 6038-0118, manufactured by Kuraray Co., Ltd., having a length of 358.0 mm, a width of 12.35 mm and a thickness of 2.8 mm (density, 0.38 g/cm³) was impregnated with 2.0 g of the compound (52) by adding it dropwise to the polyurethane surface of the support layer, and one tip of the resulting material was equipped with a buckle to prepare a collar. The collar was put on a cat which was subsequently kept in a cage in which a fresh carpet rag had been spread. One week thereafter, the carpet rag was removed from the cage and cut into a disc of 5 cm in diameter. A total of 60 cat flea eggs were put on the disc together with dried bovine blood and incubated at 24°C for 20 days to observe any emergence of adult fleas. The same test was carried out after 2 weeks, and then after 4 weeks of keeping the cat in cage. Each observation was repeated three times, with the average results shown in Table 2.

**TABLE 2**

| Compound Tested | Emergence of Adult Fleas (%): | | |
|---|---|---|---|
| | After 1 Week | After 2 Weeks | After 4 Weeks |
| (52) | 0 | 0 | 0 |
| none | 84 | 78 | 81 |

### EXAMPLE 9

A support layer of Kuralino 6038-0118, manufactured by Kuraray Co., Ltd., having a length of 10 mm, a width of 12.35 mm and a thickness of 2.8 mm (density, 0.38 g/cm³) was impregnated with 56 mg of the compound (14) by adding it dropwise to the polyurethane surface of the support layer. After 3 months of storage of the sample thus treated with the compound (14), a total of 30 cat fleas were allowed to creep on the stored sample, which was subsequently covered with a plate of 5.5 cm in diameter and 1.5 cm in height. Thereafter, the number of dead or dying fleas was observed at predetermined intervals. The observation was repeated three times, with the average results achieved shown in Table 3. Separately, each of two polyurethane sheets obtained by reacting polyol with isocyanate (density, 0.20 g/cm³ and 0.06 g/cm³) was cut into a piece having a length of 10 mm, a width of 12.35 mm and a thickness of 2.8 mm, and the piece was impregnated with 56 mg of the compound (14) by adding it dropwise to the polyurethane surface of the support layer. After 3 months of storage of the sample thus treated with the compound (14), a total of 30 cat fleas were allowed to creep on the stored sample, and the number of dead or dying fleas was observed in the same manner as described above. The observation was repeated three times, with the average results achieved also shown in Table 3.

**TABLE 3**

| Polyurethane Density (g/cm³) | Lethality (%) after: | | | |
|---|---|---|---|---|
| | 1 hr | 2 hrs | 4 hrs | 24 hrs |
| 0.38 | 67 | 83 | 97 | 100 |
| 0.20 | 7 | 27 | 50 | 73 |
| 0.06 | 0 | 13 | 27 | 30 |

As is evident from the results shown in the above tables, in accordance with the present invention, pest control effect can be maintained for a prolonged period of time by the use of a polyurethane-based artificial leather base material having a specified density.

## Claims

1. An insecticide support material comprising a polyurethane material impregnated with an insecticide active component, characterised in that said support material has a density of from 0.3 to 0.45 g/cm³.

2. A material as claimed in claim 1 and comprising
(a) a polyurethane layer having a porous structure and
(b) a non-woven fabric base layer attached to the polyurethane layer and comprising nylon elements three-dimensionally adhered to each other with a polyurethane, the insecticide active agent being contained in the polyurethane layer and the base layer.

3. A material as claimed in claim 1 or 2 and in the form of a collar for animal use.

4. A material as claimed in claim 1, 2 or 3 wherein said insecticide active component is present in an amount of from 15 to 100 mg per 1 cm² of the area of said polyurethane material or is present in a collar in a total amount of 0.3 to 5g.

5. A material as claimed in any preceding claim, wherein said insecticide active component is selected from pyrethroid compounds, organic phosphorous compounds, carbamate compounds, juvenile hormone compounds and chitin synthesis inhibitors.

6. A material as claimed in any one of claims 1 to 4, wherein said insecticide active component is selected from prallethrin, d-allethrin, cyphenothrin, empenthrin, d-tetramethrin, d-phenothrin, fenitrothion, metoxadiazone and pyriproxyfen.

7. A material as claimed in any preceding claim, wherein said insecticide active component further comprises a synergist.

8. A material as claimed in claim 7, wherein said synergist is present in an amount of from 1 to 10 parts by weight per 1 part by weight of said insecticide active component.

9. A material as claimed in claim 7 or 8, wherein said synergist is selected from bis(2,3,3,3-tetrachloropropyl) ether, N-(2-ethylhexyl)bicyclo(2.2.1)hept-5-en-2,3-dicarboximide, isobornyl thiocyanatoacetate and α-[2-(2-butoxyethoxy)ethoxy]-4,5-methylenedioxy-2-propyltoluene.

10. A material as claimed in any preceding claim, wherein said polyurethane material is in the form of artificial leather.

## Patentansprüche

1. Trägermaterial für Insektizide, umfassend ein mit einem insektizid wirksamen Bestandteil getränktes Polyurethanmaterial, dadurch gekennzeichnet, daß das Trägermaterial eine Dichte von 0.3 bis 0.45 g/cm³ aufweist.

2. Material nach Anspruch 1, das (a) eine Polyurethanschicht mit poröser Struktur und (b) eine Vliesstoff-Grundschicht umfaßt, die an die Polyurethanschicht gebunden ist und dreidimensional mit einem Polyurethan aneinander gebundene Nylonelemente umfaßt, wobei der insektizide Wirkstoff in der Polyurethanschicht und der Grundschicht enthalten ist.

3. Material nach Anspruch 1 oder 2 und in Form eines Halsbandes zur Verwendung bei Tieren.

4. Material nach Anspruch 1, 2 oder 3, wobei der insektizide Wirkstoff in einer Menge von 15 bis 100 mg pro 1 cm² der Fläche des Polyurethanmaterials oder in einem Halsband in einer Gesamtmenge von 0.3 bis 5 g vorhanden ist.

5. Material nach einem der vorstehenden Ansprüche, wobei der insektizid wirksame Bestandteil aus Pyrethroidverbindungen, organischen Phosphorverbindungen, Carbamatverbindungen, Juvenilhormonverbindungen und Chitinsyntheseinhibitoren ausgewählt ist.

6. Material nach einem der Ansprüche 1 bis 4, wobei der insektizid wirksame Bestandteil aus Prallethrin, d-Allethrin, Cyphenothrin, Empenthrin, d-Tetramethrin, d-Phenothrin, Fenitrothion, Metoxadiazon und Pyriproxyfen ausgewählt ist.

7. Material nach einem der vorstehenden Ansprüche, wobei der insektizid wirksame Bestandteil weiter einen Synergisten umfaßt.

8. Material nach Anspruch 7, wobei der Synergist in einer Menge von 1 bis 10 Gew.-Teilen pro 1 Gew.-Teil des insektizid wirksamen Bestandteils vorhanden ist.

9. Material nach Anspruch 7 oder 8, wobei der Synergist aus Bis(2,3,3,3-tetrachlorpropyl)ether, N-(2-Ethylhexyl)bicyclo(2.2.1)hept-5-en-2,3-dicarbonsäureimid, Thiocyanatoessigsäureisobornylester und α-[2-(2-Butoxyethoxy)ethoxy]-4,5-methylendioxy-2-propyltoluol ausgewählt ist.

10. Material nach einem der vorstehenden Ansprüche, wobei das Polyurethanmaterial in Form von Kunstleder ist.

## Revendications

1. Matériau support insecticide comprenant un matériau à base de polyuréthane imprégné d'un principe actif insecticide, caractérisé en ce que ledit matériau support a une masse volumique comprise entre 0,3 et 0,45 g/cm³.

2. Matériau selon la revendication 1 et comprenant (a) une couche de polyuréthane ayant une structure poreuse et (b) une couche de base en étoffe non tissée fixée à la couche de polyuréthane et comprenant des éléments de Nylon fixés entre eux selon trois dimensions avec un polyuréthane, le principe actif insecticide étant contenu dans la couche de polyuréthane et la couche de base.

3. Matériau selon la revendication 1 ou 2 et sous la forme d'un collier à utiliser chez un animal.

4. Matériau selon la revendication 1, 2 ou 3, dans lequel ledit principe actif insecticide est présent en une quantité de 15 à 100 mg/cm² de la surface dudit matériau à base de polyuréthane ou est présent dans un collier en une quantité totale de 0,3 à 5 g.

5. Matériau selon l'une quelconque des revendications précédentes, dans lequel ledit principe actif insecticide est choisi parmi les composés pyréthroïde, les composés phosphoreux organiques, les composés carbamate, les composés de type hormone de jeunesse des insectes et les inhibiteurs de la synthèse de la chitine.

6. Matériau selon l'une quelconque des revendications 1 à 4, dans lequel ledit principe actif insecticide est choisi parmi les suivants : pralléthrine, d-alléthrine, cyphénothrine, empenthrine, d-tétraméthrine, d-phénothrine, fénitrothion, métoxadiazone et pyriproxyfen.

7. Matériau selon l'une quelconque des revendications précédentes, dans lequel ledit principe actif insecticide comprend de plus un produit synergique.

8. Matériau selon la revendication 7, dans lequel ledit produit synergique est présent en une quantité de 1 à 10 parties en poids pour 1 partie en poids dudit principe actif insecticide.

9. Matériau selon la revendication 7 ou 8, dans lequel ledit produit synergique est choisi parmi le bis(2,3,3,3-tétrachloropropyl)-éther, le N-(2-éthylhexyl)bicyclo(2.2.1)hept-5-ène-2,3-dicarboximide, le thiocyanatoacétate d'isobornyle et l'α-[2-(2-butoxyéthoxy)éthoxy]-4,5-méthylènedioxy-2-propyltoluène.

10. Matériau selon l'une quelconque des revendications précédentes, dans lequel ledit matériau à base de polyuréthane se trouve sous la forme d'un cuir artificiel.
